# EUROPEAN PATENT APPLICATION

(11) **EP 4 822 358 A1**
(43) Date of publication of application: **14.10.2026**
(21) Application number: 26170605.5
(22) Date of filing: 02.04.2026
(51) Int. Cl.: G01N 35/10, H01J 49/04

(54) **SAMPLE GAS SUPPLY DEVICE**

(30) Priority: 09.04.2025 JP 2025064603
(71) Applicant: Jeol Ltd., Akishima, Tokyo 196-8558 (JP)
(72) Inventor: ITO, Masahiro, Tokyo, 196-8558 (JP); MIWA, Yoshihiko, Tokyo, 196-8558 (JP); KATO, Toshiyuki, Tokyo, 196-8558 (JP)
(74) Representative: Boult Wade Tennant LLP

(57) **Abstract**

The device (12) has a central structural body (20) consisting of a flow regulating valve (22) and a nozzle (24) which are integrated together. Open-close valves (28, 38, 48) are mounted around the central structural body (20). The valves (28, 38, 48) have their respective central axes (C3, not shown, C4) parallel to the central axes (C1, C2) of the central structural body (20). The flow regulating valve (22) has a housing (66) and a movable body (54). The housing (66) has three branch ports (A1-A3) and an orifice. The movable body (54) has a needle (60). The flow rate of the sample gas is regulated by adjustment of the amount of insertion of the needle (60) into the orifice.

## Description

### BACKGROUND OF THE DISCLOSURE

### 1. Field of the Disclosure

The present disclosure relates to a sample gas supply device and, more particularly, to a device for feeding a sample gas into an ion source.

### 2. Description of the Related Art

A mass spectrometer has an ion source. Various ion sources following various methods of ionization are in use. Also, ion sources capable of selectively using a plurality of ionization methods are known.

A reference sample is used for calibration, tuning, or other purpose of a mass spectrometer. In particular, a sample gas generated by vaporization of such a reference sample is admitted into the ion source where the sample gas is ionized. The resulting ions are analyzed by mass spectrometry. The mass spectrometer is adjusted based on the results of the mass analysis. A sample gas supply device is used to supply the sample gas into the ion source. The sample gas supply device is also referred to as a sample gas introduction device or as a sample introduction device.

A sample gas supply device disclosed in Document 1 (JP-A-2001-126658) has a sample container, a flow regulating valve, a rotary pump, nozzles, and other components. A sample gas supply device disclosed in Document 2 (JP-A-11-64286) is equipped with a plurality of sample gas introduction portions.

Since a sample gas supply device is an assembly of a plurality of parts as described in Document 1, such sample gas supply devices tend to increase in size. It is an object of the present disclosure to provide a miniaturized sample gas supply device.

### SUMMARY

A sample gas supply device associated with the present disclosure comprises:
a plurality of units including at least one source of a sample gas;
a nozzle for discharging the sample gas; and
a flow regulating valve having a plurality of branch ports connected with the gas supply units and an orifice connected to the nozzle.

In the flow regulating valve, the plurality of branch ports are in spatial communication with each other. The flow regulating valve is configured to regulate a flow rate of the sample gas exiting from the orifice.

According to the present disclosure, the flow regulating valve itself has the plurality of branch ports and so it is not necessary to mount a flow passage-branching member outside the flow regulating valve. This allows for miniaturization of the sample gas supply device.

### BRIEF DESCRIPTION OF THE DRAWINGS

FIG. 1 is a diagram showing one example of configuration of a sample gas supply device associated with one embodiment of the present invention.
FIG. 2 is a side elevation of the sample gas supply device of FIG. 1.
FIG. 3 is a plan view of the sample gas supply device of FIG. 1.
FIG. 4 is a cross-sectional view of the sample gas supply device of FIG. 1.
FIG. 5 is a table illustrating a first mode of operation of a set of valves.
FIG. 6 is a table illustrating a second mode of operation of the set of valves.
FIG. 7 is a flowchart illustrating the manner in which the range of motion of a needle is set.
FIG. 8 shows an example of display of the range of motion of the needle set as illustrated in FIG. 7.

### DETAILED DESCRIPTION OF THE DISCLOSURE

An embodiment of the present disclosure is hereinafter described with reference to the drawings.

### (1) Summary of the Embodiment

A sample gas supply device of the present embodiment has a plurality of units, a nozzle, and a flow regulating valve. The plurality of units include at least one source of a sample gas. The nozzle discharges the sample gas. The flow regulating valve has a plurality of branch ports and an orifice connected to the nozzle, the branch ports being connected with the units. In the flow regulating valve, the branch ports are in spatial communication with each other. The flow regulating valve adjusts the flow rate of the sample gas going out of the orifice.

In this construction, the flow regulating valve itself has the plurality of branch ports and so there is no necessity to mount a flow passage-branching member outside the flow regulating valve. This allows for miniaturization of the sample gas supply device. In the present embodiment, the flow regulating valve has two, three, or more branch ports.

The source of a sample gas is a container that accommodates a reference sample, for example. In the container, the reference sample vaporizes into a sample gas. Alternatively, the reference sample may be vaporized outside the container. The plurality of units connected to the flow regulating valve may contain a plurality of sources of sample gas. In the present embodiment, the flow regulating valve is a needle valve, but other type of valve may also be used as the flow regulating valve. When the flow rate through the flow regulating valve is zero, the branch ports are spatially isolated from the orifice in the flow regulating valve. In other states, the branch ports are in spatial communication with the orifice. The orifice can also be referred to as an exit port or as a discharge port. The branch ports and the units are directly or indirectly connected. Preferably, the branch ports and their respective units are interconnected via connecting members and open-close valves. The orifice and the nozzle are directly or indirectly interconnected. Preferably, the orifice and the nozzle are directly interconnected.

In the present embodiment, the flow regulating valve has a housing and a movable body. The housing has the plurality of branch ports and the orifice. The movable body is provided within the housing and has a needle inserted into the orifice, The branch ports are in spatial communication with each other via the internal space of the housing. The flow rate is regulated by adjustment of the amount of insertion of the needle into the orifice. The housing can also be referred to as a syringe.

The sample gas supply device of the present embodiment includes the plurality of open-close valves provided on a plurality of branch paths which are connected to their respective branch ports. Each of the above-described units represents a device tool or item and has an open-close valve.

The sample gas supply device of the present embodiment includes an electric motor that produces a driving force for adjustment of the flow rate through the flow regulating valve. The motor is provided on the central axis of the flow regulating valve. According to this configuration, if a plurality of open-close valves is arranged around the flow regulating valve, for example, the motor poses no hindrance to the valves or the component density of the sample gas supply device including the motor can be enhanced.

In the present embodiment, the central axis of the nozzle and the central axis of the flow regulating valve coincide with each other. The central axis of the nozzle may be tilted relative to the central axis of the flow regulating valve or a curved nozzle may be used.

In the present embodiment, the nozzle is coupled to the housing. That is, the nozzle is directly connected to the housing. More specifically, the nozzle is integrated with the housing. This structure permits a further reduction in the size of the sample gas supply device. Furthermore, the heat transfer from the housing to the nozzle can be improved. A nozzle having a thick-walled body may also be used. The orifice in the housing is in spatial communication with the internal space of the nozzle.

In the present embodiment, the tip of the needle enters the nozzle in a state where the orifice is closed off by the needle. The structure of the flow regulating mechanism can take various forms. In the present embodiment, the nozzle is coupled to the housing. This configuration permits a reduction in the component count.

In the present embodiment, the branch paths extend from their respective branch ports toward a periphery along a plane perpendicular to the central axis of the flow regulating valve. This structure permits arrangement of a plurality of open-close valves, for example, within a space existing around the flow regulating valve. In this embodiment, the branch paths extend radially from their respective branch ports to the surroundings. The branch paths are flow passages.

In the present embodiment, the open-close valves have their central axes parallel to a central axis of the flow regulating valve. This structure makes it possible to enhance the density of valves or to reduce the dead space in the flow regulating device.

In the present embodiment, the flow regulating valve is equipped with a heater and connected with the open-close valves via heat-conducting members. In this structure, heat generated by the heater is transferred to the open-close valves via the heat-conducting members. Heating of the various members can prevent or alleviate adhesion or liquefaction of the sample gas. The heat-conducting members are hollow connective members or pipes, for example.

In the present embodiment, each heat-conducting member has a proximal end connected to the flow regulating valve and a distal end connected to a respective one of the open-close valves. The flow regulating valve may be provided with a recessed portion that engages the distal end. Each open-close valve may be provided with a recessed portion that engages the distal end. In these cases, good heat-transfer capability can be had. In the present embodiment, the plurality of units includes at least one source of a sample gas and at least one vacuum pump.

### (2) Details of the Embodiment

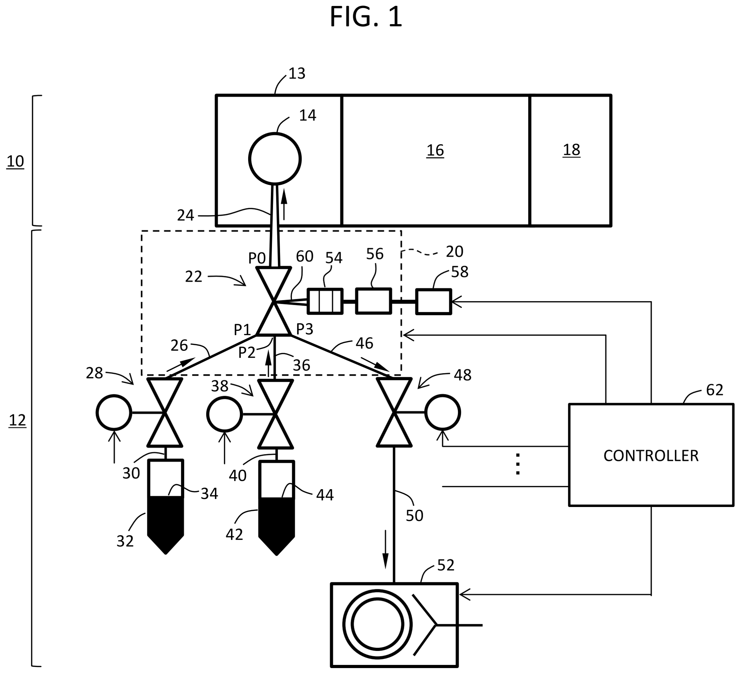

Referring to FIG. 1, there is shown a mass spectrometry system of the present embodiment. This system performs a mass analysis of a sample and generates a mass spectrum. Analysis of the mass spectrum enables qualitative or quantitative analysis of the sample.

The mass spectrometry system has a mass spectrometer 10 and a sample gas supply device 12. The sample gas supply device 12 supplies a sample gas generated from a reference sample into the mass spectrometer 10 for tuning, calibration, or other operation of the spectrometer 10. As described later, the sample gas supply device 12 supplies selectively a plurality of reference sample gases into the mass spectrometer 10. A gas chromatograph may be contained in the mass spectrometry system.

Referring still to FIG. 1, the mass spectrometer 10 has a vacuum vessel 13 in which an ion source 14, a mass analyzer 16, and a detector 18 are disposed. A sample is sent from the gas chromatograph, for example, into the ion source 14, where the sample is ionized. For example, the ion source 14 has a first function of generating ions in accordance with a first method of ionization and a second function of generating ions in accordance with a second method of ionization. For example, the first method of ionization is electron ionization. The second method of ionization is a method of ionization other than electron ionization, such as chemical ionization or electric field ionization. Usually, the used method of ionization is selected in advance.

The mass analyzer 16 is a quadrupole mass spectrometer or a time-of-flight mass spectrometer, for example. The detector 18 detects ions going out of the mass analyzer 16.

The sample gas supply device 12 is coupled to the mass spectrometer 10 and has a central structural body 20 comprising a flow regulating valve 22 and a nozzle 24. Furthermore, the central structural body 20 has a coupling 56 and an electric motor 58. The motor 58 is a stepping motor, for example. A sample gas is discharged into the ion source 14 from the nozzle 24. Ions produced by ionization of the sample gas are mass analyzed. The mass spectrometer 10 is tuned or calibrated based on the results of the mass analysis.

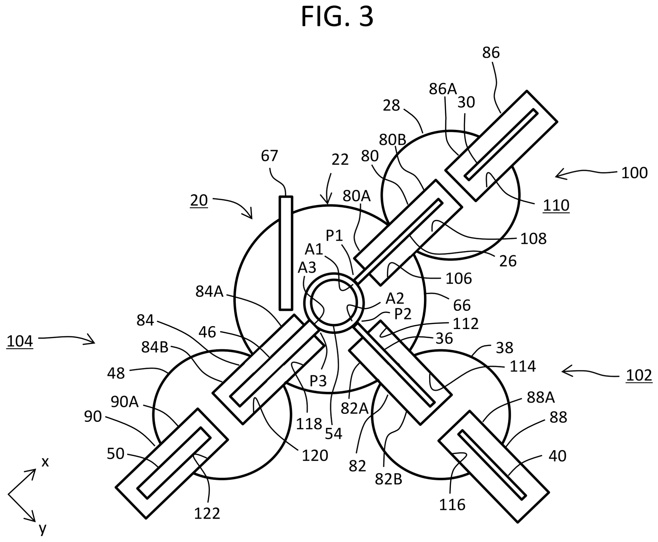

In particular, the flow regulating valve 22 is a needle valve and has a hollow housing 66 (FIG. 3) and a movable body 54. The movable body 54 is provided within the housing 66 and is equipped with a needle 60.

In the present embodiment, the flow regulating valve 22 has a first port P1, a second port P2, a third port P3, and an exit port P0. Each of the first to third ports P1-P3 is a branch port (also referred to as a primary port). The exit port P0 is a secondary port. The internal spaces of the first to third ports P1-P3 are in spatial communication with each other and referred to as primary spaces.

The exit port P0 has an orifice which serves as an aperture and into which the needle 60 is inserted. When the orifice is completely closed off by the needle 60, the internal space, or the secondary space, of the nozzle 24 is completely isolated from the primary spaces. The flow rate of the sample gas flowing from the primary spaces into the secondary space is determined by the amount of insertion of the needle 60 into the orifice.

The first flow passage (first branch path) is connected to the first port P1 and has the first branch port connected to the first flow passage. A first valve 28 which is an open-close valve is mounted in the first flow passage. One example of the open-close valve is an electromagnetic valve. The first flow passage includes a flow passage 26 between the first port P1 and the first valve 28 and another flow passage 30 between the first valve 28 and a first reference sample container 32.

A second flow passage (second branch path) is connected to the second port P2. More specifically, the second port P2 has a second branch port that is connected to the second flow passage in which a second valve 38 being an open-close valve is mounted. The second flow passage includes a flow passage 36 between the second port P2 and the second valve 38 and another flow passage 40 between the second valve 38 and a second reference sample container 42.

A third flow passage (third branch path) is connected to the third port P3. In particular, the third port P3 has a third branch port connected to the third flow passage in which a third valve 48 being an open-close valve is mounted. The third flow passage includes a flow passage 46 between the third port P3 and the third valve 48 and a flow passage 50 between the third valve 48 and a pump 52. The pump 52 is a vacuum pump such as a rotary pump.

The first reference sample container 32, the second reference container 42, and the pump 52 are gas supply units, or gas supply modules, of the sample gas supply device 12. Three or more reference sample containers may be provided, in which case the flow regulating valve 22 may be provided with four or more branch ports. The pump 52 is a gas supply unit for drawing the gas from inside the flow passages and from inside the flow regulating valve 22. A first reference sample 34 and a second reference sample 44 are received in the first reference sample container 32 and the second reference sample container 42, respectively. Normally, the first reference sample 34 and the second reference sample 44 vaporize in the first reference sample container 32 and the second reference sample container 42, respectively.

The sample gas supply device 12 further includes a controller 62 which is made of a CPU for executing programs, for example, and which controls the operations of the flow regulating valve 22, the three valves 28, 38, 48, and the pump 52. Furthermore, the controller 62 controls the operation of a cartridge heater (described later). In addition, the controller 62 controls the operation of the mass spectrometer 10 when needed.

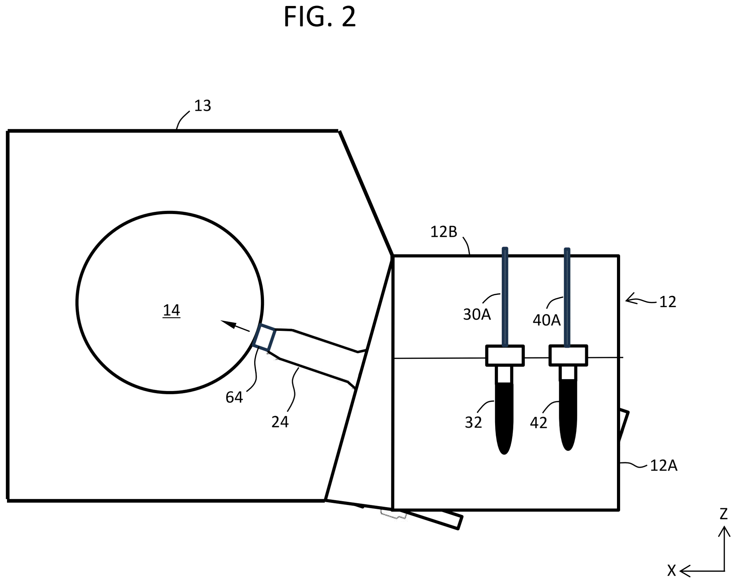

FIG. 2 is a side elevation of the sample gas supply device 12. In FIG. 2, the X direction is a first horizontal direction and the Z direction is a vertical direction. A direction perpendicular to the plane of the paper of FIG. 2 is the Y direction, and is a second horizontal direction. The ion source 14 is mounted inside the vacuum vessel 13.

The sample gas supply device 12 has a body 12A and a cover 12B. Various units including the first reference sample container 32 and the second reference sample container 42 are mounted under the cover 12B. A pipe 30A connected to the first valve 28 is connected to the first reference sample container 32. Another pipe 40A connected to the second valve 38 is connected to the second reference sample container 42.

The nozzle 24 has a tip connected to the ion source 14 via a connecting part 64. An opening is formed in the tip of the nozzle 24. A sample gas is discharged from the opening in the tip of the nozzle 24 and passes into the ion source 14, whereby the sample gas is ionized.

FIG. 3 is a plan view of the sample gas supply device 12. The direction of the central axis of the flow regulating valve 22 is defined as the z direction. The x and y directions are perpendicular to the z direction. FIG. 3 shows the sample gas supply device 12 as viewed from the z direction.

The flow regulating valve 22 and a nozzle (not shown) together make up the central structural body 20. A first structural body 100, a second structural body 102, and a third structural body 104 are arranged around the central structural body 20. The first structural body 100, the second structural body 102, and the third structural body 104 have the first valve 28, the second valve 38, and the third valve 48, respectively.

Each of the first valve 28, the second valve 38, and third valve 48 is an open-close valve. The first to third valves 28, 38, 48 extend in the z direction and have their central axes parallel to the z direction. The central axes of the three valves 28, 38, 48 are parallel to the central axis of the flow regulating valve 22. The side surfaces of these three valves 28, 38, 48 are close to or in contact with the side surface of the flow regulating valve 22.

The flow regulating valve 22 has the hollow housing 66 and the movable body 54 as described previously. The movable body 54 is equipped with the needle 60. In the illustrated example, the housing 66 is generally cylindrical in shape. The central axis of the flow regulating valve 22 is parallel to the z direction and coincident with the central axis of the movable body 54, i.e., the central axis of the needle 60. A cartridge heater 67 is partially buried in the wall of the housing 66.

The housing 66 has an internal space where the movable body 54 moves along the z direction. The housing 66 has the first port P1, the second port P2, and the third port P3, i.e., first branch port A1, second branch port A2, and third branch port A3. The first to third branch ports A1-A3 are in spatial communication with each other via the internal space of the housing 66 and oriented in a direction perpendicular to the z direction. Within the plane (xy plane) defined by the x and y directions, the angular position of the x direction is defined to be at 0 degree. The angle of the first branch port A1 relative to the x direction is 0 degree. The angle of the second branch port A2 relative to the x direction is 90 degrees. The angle of the third branch port A3 relative to the x direction is 180 degrees. These angles may also be set to 120 degrees.

As already described, the first flow passage, the second flow passage, and the third flow passage are connected to the first branch port A1, the second branch port A2, and the third branch port A3, respectively, and spread radially along the xy plane.

Within the xy plane, the angle of the first flow passage relative to the x direction is 0 degree. The first valve 28 is mounted in the first flow passage. A first inner connecting member 80 is mounted across both the flow regulating valve 22 and the first valve 28 and has a proximal end 80A that is inserted in a recessed portion 106 formed in the flow regulating valve 22, whereby the proximal end 80A is coupled to the recessed portion 106. An external thread is formed in the surface of the proximal end 80A. An internal thread is formed in the surface of the recessed portion 106. The external and internal threads are in threaded engagement with each other.

The distal end 80B of the first inner connecting member 80 is inserted in a recessed portion 108 formed in the first valve 28, whereby the distal end 80B is coupled to the recessed portion 108. An external thread is formed in the surface of the distal end 80B. An internal thread is formed in the surface of the recessed portion 108. The external and internal threads are in threaded engagement with each other. The first inner connecting member 80 has the flow passage 26 forming a part of the first flow passage.

A first outer connecting member 86 is mounted between the first valve 28 and the first reference sample container 32 and has a proximal end 86A that is inserted in a recessed portion 110 formed in the first valve 28, whereby the proximal end 86A is coupled to the recessed portion 110. In particular, an external thread is formed in the surface of the proximal end 86A. An internal thread is formed in the surface of the recessed portion 110. The external and internal threads are in threaded engagement with each other. The first outer connecting member 86 has the flow passage 30 that forms a part of the first flow passage.

In the xy plane, the angle of the second flow passage relative to the x direction is 90 degrees. The second valve 38 is mounted in the second flow passage. A second inner connecting member 82 is mounted across both the flow regulating valve 22 and the second valve 38 and has a proximal end 82A that is inserted in a recessed portion 112 formed in the flow regulating valve 22, whereby the proximal end 82A is coupled to the recessed portion 112. An external thread is formed in the surface of the proximal end 82A. An internal thread is formed in the surface of the recessed portion 112. The external and internal threads are in threaded engagement with each other.

The second inner connecting member 82 has a distal end 82B that is inserted in a recessed portion 114 formed in the second valve 38, whereby the distal end 82B is coupled to the recessed portion 114. An external thread is formed in the surface of the distal end 82B. An internal thread is formed in the surface of the recessed portion 114. The external and internal threads are in threaded engagement with each other. The second inner connecting member 82 has the flow passage 36 that forms a part of the second flow passage.

A second outer connecting member 88 is mounted between the second valve 38 and the second reference sample container 42 and has a proximal end 88A that is inserted in a recessed portion 116 formed in the second valve 38, whereby the proximal end 88A is coupled to the recessed portion 116. An external thread is formed in the surface of the proximal end 88A. An internal thread is formed in the surface of the recessed portion 116. The external and internal threads are in threaded engagement with each other. The second outer connecting member 88 has the flow passage 40 that forms a part of the second flow passage.

Within the xy plane, the angle of the third flow passage relative to the x direction is 180 degrees. The third valve 48 is mounted in the third flow passage. A third inner connecting member 84 is mounted across both the flow regulating valve 22 and the third valve 48 and has a proximal end 84A inserted in a recessed portion 118 formed in the flow regulating valve 22, whereby the proximal end 84A is coupled to the recessed portion 118. An external thread is formed in the surface of the proximal end 84A. An internal thread is formed in the surface of the recessed portion 118. The external and internal threads are in threaded engagement with each other.

The third inner connecting member 84 has a distal end 84B inserted in a recessed portion 120 formed in the third valve 48, whereby the distal end 84B is coupled to the recessed portion 120. An external thread is formed in the surface of the distal end 84B. An internal thread is formed in the surface of the recessed portion 120. The external and internal threads are in threaded engagement with each other. The third inner connecting member 84 has the flow passage 46 forming a part of the third flow passage.

A third outer connecting member 90 is mounted between the third valve 48 and the pump 52 and has a proximal end 90A that is inserted in a recessed portion 122 formed in the third valve 48, whereby the proximal end 90A is coupled to the recessed portion 122. An external thread is formed in the surface of the proximal end 90A. An internal thread is formed in the surface of the recessed portion 122. The external and internal threads are in threaded engagement with each other. The third outer connecting member 90 has the flow passage 50 forming a part of the third flow passage.

Heat produced by the cartridge heater 67 is transmitted from the flow regulating valve 22 to the first valve 28 via the first inner connecting member 80. Also, the heat from the cartridge heater 67 is transmitted to the second valve 38 from the flow regulating valve 22 via the second inner connecting member 82. Furthermore, the heat from the cartridge heater 67 is transmitted to the third valve 48 from the regulating valve 22 via the third inner connecting member 84.

As shown in FIG. 3, the structural bodies 20, 100, 102, and 104 are arranged densely. In other words, the plural valves 22, 28, 38, and 48 are compactly arranged. There is good heat transfer between the flow regulating valve 22 and any one of the three valves 28, 38, and 48. Within the xy plane, the first, second, and third flow passages may be angularly spaced from each other by 120 degrees. Four or more flow passages may be provided. An adhesive is applied to the threaded engagement portions of the external and internal threads to enhance the degree of vacuum.

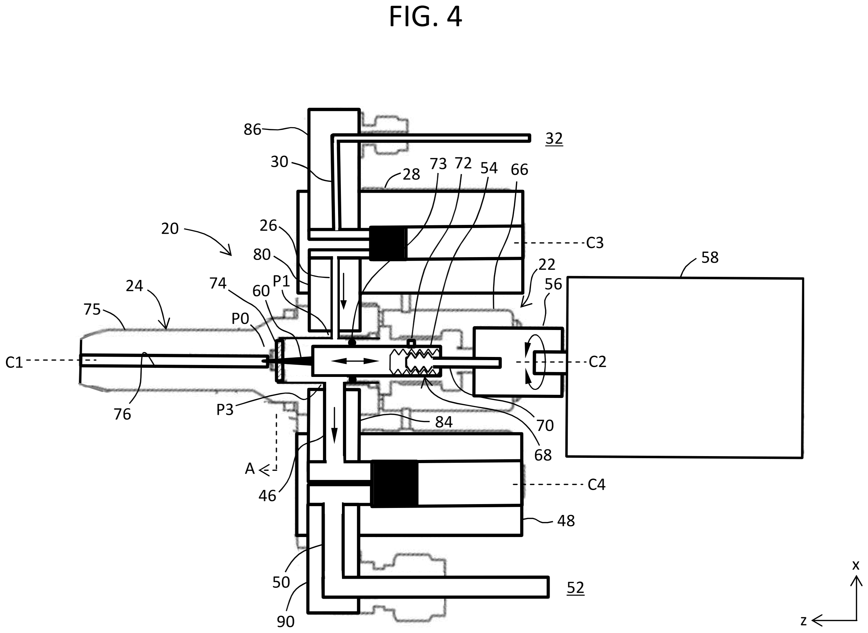

FIG. 4 shows an xz cross section of the sample gas supply device 12. As already described, the central structural body 20 is made up of the flow regulating valve 22 and the nozzle 24. The flow regulating valve 22 has the housing 66 and the movable body 54. The movable body 54 makes a motion along the central axis C2 of the regulating valve 22 and is equipped with the needle 60.

The movable body 54 is coupled to the motor 58 via the coupling 56. Rotary force generated by the motor 58 is transmitted to the movable body 54 via the coupling 56. A motion conversion mechanism 68 converts a rotary motion into a linear motion. The conversion mechanism 68 has an external thread formed in a shaft 70 making rotary motion and an internal thread formed in the movable body 54. The external and internal threads are in threaded engagement with each other. The motion conversion mechanism 68 has a protrusion 72 acting as a rotation stopper. The protrusion 72 is inserted in a groove formed in the housing 66, the groove extending in the z direction.

The movable body 54 has an O-ring 73 serving as a seal member. The O-ring 73 provides a seal between the outer surface of the movable body 54 and the inner surface of the housing 66.

The housing 66 has the exit port P0 provided with an orifice that is formed in an orifice plate 74 forming a part of the housing 66. The tip of the needle 60 is inserted into the orifice. The flow rate of the sample gas emerging from the orifice is determined by the amount of insertion of the needle 60 into the orifice.

In FIG. 4, the nozzle 24 is present in the portion of the device indicated by broken line A and has a nozzle body 75 and a flow passage 76 formed in the body. The orifice is in spatial communication with the flow passage 76. When the orifice is closed off by the needle 60, the tip of the needle 60 enters the flow passage 76. The nozzle body 75 extends along the z direction and is thick-walled. The nozzle body 75 is integrated with a part of the housing 66, i.e., these are made of a single member. This reduces the parts count of the flow regulating valve 22. Also, there is good thermal conductivity from the flow regulating valve 22 to the nozzle 24.

The first branch port in the first port P1, the second branch port in the second port P2, and the third branch port in the third port P3 are in spatial communication with each other via the inner space of the housing 66. In FIG. 4, there are shown the first inner connecting member 80, the first valve 28, and the first outer connecting member 86. The first branch port is connected to the first valve 28 via the flow passage 26 in the first inner connecting member 80. The flow passage 30 in the first outer connecting member 86 is connected to the first valve 28. Also shown in FIG. 4 are the third inner connecting member 84, the third valve 48, and the third outer connecting member 90. The third branch port is connected to the third valve 48 via the flow passage 46 in the third inner connecting member 84. The flow passage 50 in the third outer connecting member 90 is connected to the third valve 48.

The central axis C1 of the nozzle 24 is coincident with the central axis C2 of the flow regulating valve 22. The central axis C3 of the first valve 28, the central axis (not shown) of the second valve 38, and the central axis C4 of the third valve 48 are parallel to those central axes C1 and C2. The coupling 56 and the motor 58 are arranged on the central axis C2 of the regulating valve 22. The flow regulating valve 22 and the first to third valves 28, 38, 48 are generally cylindrical in form. To provide enhanced suction efficiency, the flow passages 46 and 50 constituting the third branch path are set greater in inside diameter than the flow passages 26 and 30 constituting the first branch path and than the two flow passages constituting the second branch path.

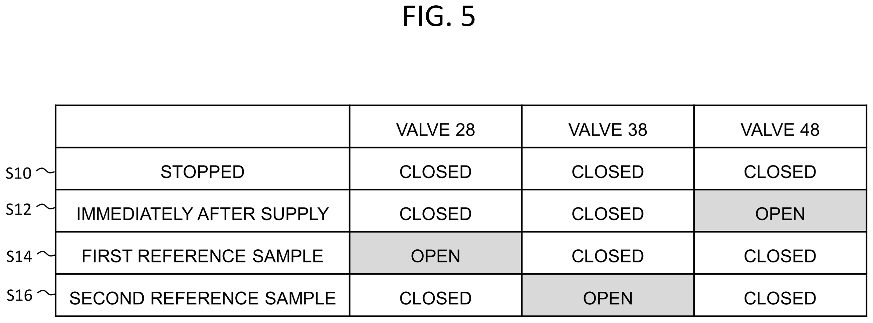

In FIG. 5, there is shown an example of a first mode of operation of the three valves 28, 38, and 48. When the device is not in operation, i.e., no sample gas is supplied, the three valves 28, 38, and 48 are closed (step S10). Prior to supply of a sample gas, only the third valve 48 is opened. Immediately after supply of the sample gas, only the third valve 38 is opened (step S12). When the flow regulating valve 22 is closed, its inner space and the flow passages are sucked by the pump 52, thus forming a vacuum. Then, the third valve 48 is closed.

When a first reference sample is used, only the first valve 28 is opened (step S14). A first sample gas produced in the first reference sample container 32 is sent to the ion source 14 via the second valve 38, the first valve 28, the flow regulating valve 22, and the nozzle 24. On the other hand, when a second reference sample is used, only the second valve 38 is opened (step S16), and a second sample gas produced in the second reference sample container 42 is sent to the ion source 14 via the flow regulating valve 22 and the nozzle 24. The flow rate of the produced sample gas, or the first or second sample gas, is regulated by the flow regulating valve 22.

In order to make steeper the falling edge of a signal waveform representing the flow rate of the gas when the first valve 28 or the second valve 38 is closed, the third valve 48 may be opened so that the pump 52 operates to suck immediately after closing of the first valve 28 or the second valve 38. When the pump 52 is operated to suck for a long time, the state of the third valve 48 may be switched according to the operating mode of the device.

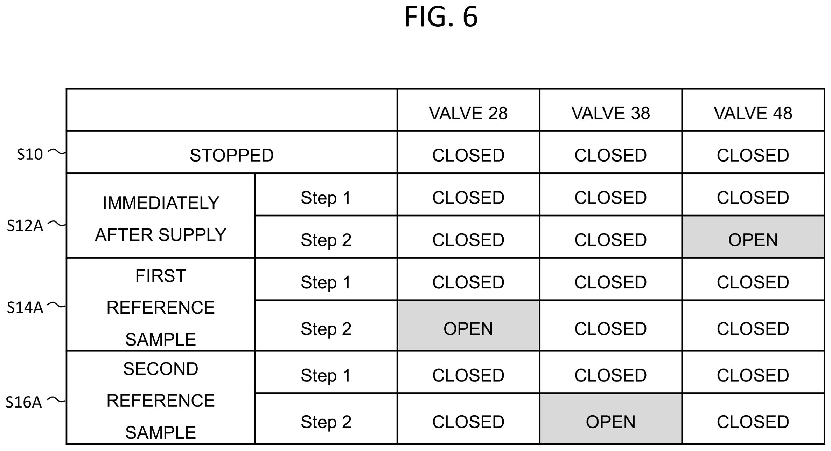

FIG. 6 illustrates an example of a second mode of operation of the three valves 28, 38, and 48. When supply of any sample gas is stopped, the three valves 28, 38, and 48 are closed (step S10). Prior to the supply of a sample gas, the three valves 28, 38, and 48 are temporarily closed. Then, the third valve 48 is opened (step S12A). When the first reference sample is used, the first valve 28 is opened (step S14A). When the second reference sample is used, the second valve 38 is opened (step S16A). Since the three valves 28, 38, and 48 are closed immediately after opening either the first valve 28 or the second valve 38, there is no instant at which the first reference sample container 32 or the second reference sample container 42 is directly connected to the pump 52, for example, due to delay of valve action.

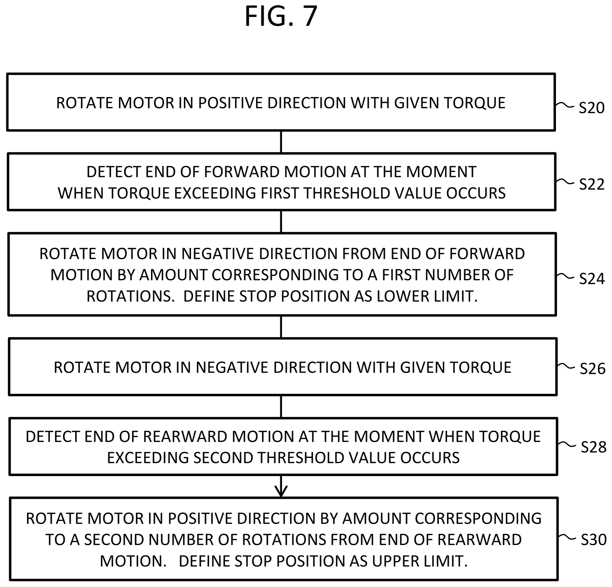

FIG. 7 illustrates a method of setting a range of motion for the movable body 54 of the flow regulating valve 22. In step S20, the motor 58 is rotated forwardly with a constant torque to thereby cause the movable body 54 to make a forward motion. This causes the needle 60 to be inserted into the orifice. In step S22, the forward motion of the movable body 54 is limited. When a torque exceeding a first threshold value occurs, the end of the range of forward motion is detected, whereupon the forward rotation is brought to a stop. In step S24, the motor 58 is rotated in the negative direction by an amount corresponding to a first number of rotations. The stop position is defined as the lower limit.

Subsequently, in step S26, the motor 58 is rotated in the negative direction with a given torque to move the movable body 54 rearwardly. In step S28, the rearward motion of the movable body 54 is limited. When a torque exceeding a second threshold value occurs, the end of rearward motion is detected, whereupon the rotation in the negative direction is stopped. In step S30, the motor 58 is rotated in the positive direction by an amount corresponding to a second number of rotations. The stop position is defined as the upper limit.

For example, the lower limit and the upper limit of the motor position are made to correspond to an opening ratio of 0% and an opening ratio of 100%, respectively, of the flow regulating valve 22. It is possible to prevent occurrence of any excessive force within the adjusting valve 22 by restricting the range of motion of the movable body 54 to between the lower and upper limits. That is, damage to the mechanical parts can be prevented. The amount of rotation of the motor 58, i.e., the number of steps B, can be found, for example, from the following Eq. (1). $B = opening ratio \times \left(upper limit-lower limit\right) / 100$ (1)

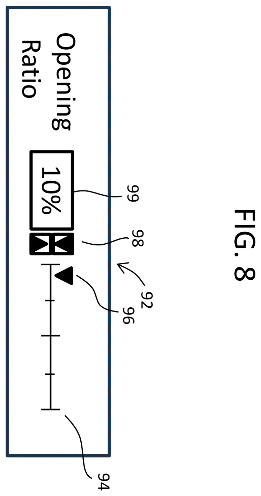

FIG. 8 illustrates a method of setting the opening ratio. A graphic 92 displayed as a user interface has a scale 94 representative of the magnitude of the opening ratio. An indicator 96 which indicates the opening ratio moves on the scale 94 in response to manipulation of a button 98. The value of the opening ratio is shown in a numerical value display section 99.

In the above-described embodiment, the flow regulating valve is equipped with the three branch ports. This eliminates the need to mount a flow path-branching member outside the flow regulating valve. Furthermore, the flow regulating valve and the nozzle are integrated together. In addition, the valves are arranged densely around the flow regulating valve. This allows for miniaturization of the sample gas supply device. Additionally, heat produced by the heater disposed in the central structural body can be effectively transmitted to the plurality of structural members or bodies.

## Claims

1. A sample gas supply device (12) comprising:
a plurality of units including at least one source (32, 42) of a sample gas;
a nozzle (24) for discharging the sample gas; and
a flow regulating valve (22) having a plurality of branch ports which are connected to the plurality of units, and an orifice connected to the nozzle (24);
wherein in the flow regulating valve (22), the plurality of branch ports is in spatial communication with each other; and
wherein the flow regulating valve (22) is configured to regulate a flow rate of the sample gas exiting from the orifice.

2. The sample gas supply device (12) as set forth in claim 1, wherein said flow regulating valve (22) comprises:
a housing (66) having the plurality of branch ports and the orifice; and
a movable body (54) provided within the housing (66) and having a needle (60) inserted into the orifice.

3. The sample gas supply device (12) as set forth in claim 1, further comprising a plurality of open-close valves (28, 38, 48) provides on a plurality of branch paths connected to the plurality of branch ports, respectively.

4. The sample gas supply device (12) as set forth in claim 1, further comprising
an electric motor (58) for applying a driving force for flow regulation to the flow regulating valve (22), wherein the motor (58) is provided on a central axis of the flow regulating valve (22).

5. The sample gas supply device (12) as set forth in any one of claims 1 to 4, wherein a central axis of the nozzle (24) and a central axis of the flow regulating valve (22) coincide with each other.

6. The sample gas supply device (12) as set forth in claim 2, wherein the nozzle (24) is coupled to the housing (66).

7. The sample gas supply device (12) as set forth in claims 2 or 6, wherein a tip of the needle enters the nozzle (24) in a state where the orifice is closed off by the needle.

8. The sample gas supply device (12) as set forth in claim 3, wherein the plurality of branch paths extends from the plurality of branch ports toward a periphery along a plane perpendicular to a central axis of the flow regulating valve (22).

9. The sample gas supply device (12) as set forth in claims 3 or 8, wherein the open-close valves (28, 38, 48) have their central axes parallel to a central axis of the flow regulating valve (22).

10. The sample gas supply device (12) as set forth in any one of claims 3, 8, or 9, wherein the flow regulating valve (22) is provided with a heater, and wherein the flow regulating valve (22) is connected to the plurality of open-close valves (28, 38,48) via a plurality of heat-conducting members.

11. The sample gas supply device (12) as set forth in claim 10, wherein each of said heat-conducting members has: a proximal end connected to the flow regulating valve (22); and a distal end connected to each of the open-close valves (28, 38, 48).

12. The sample gas supply device (12) as set forth in any one of claims 1 to 11, wherein the plurality of units includes the at least one source (32, 42) of the sample gas and at least one vacuum pump (52).
